# EUROPÄISCHE PATENTSCHRIFT

(11) **EP 0 879 398 B1**
(45) Veröffentlichungstag und Bekanntmachung des Hinweises auf die Patenterteilung: **19.02.2003**
(21) Anmeldenummer: 97951242.3
(22) Anmeldetag: 19.11.1997
(51) Int. Cl.: G01D 3/02, G01D 18/00

(54) **PIN-JUSTIERVORRICHTUNG FÜR SENSOREN**
DEVICE FOR PIN ADJUSTING FOR SENSORS
DISPOSITIF D'AJUSTAGE PAR BROCHE POUR CAPTEURS

(30) Priorität: 20.11.1996 DE 19647897
(43) Veröffentlichungstag der Anmeldung: 25.11.1998
(73) Patentinhaber: AB Elektronik GmbH, 59368 Werne (DE)
(72) Erfinder: WILCZEK, Klaus, D-59368 Werne (DE); TOPP, Volker, D-59368 Werne (DE)
(74) Vertreter: Hoffmeister, Helmut, Dr. Dipl.-Phys.
(86) Internationale Anmeldenummer: EP9706462
(87) Internationale Veröffentlichungsnummer: WO98022781

(56) Entgegenhaltungen:
- WO-A-95/18357
- DE-A- 4 445 378
- US-A- 4 783 659

## Beschreibung

Die Erfindung betrifft eine Vorrichtung zum Einjustieren einer physikalischen Größe, die von einem Sensor in Ausgangswerte oder -kurven umgeformt wird.

Aus der DE-A-3 446 248 ist ein Sensor zur Messung physikalischer Größen und ein Verfahren zum Abgleich des Sensors bekannt. Der Sensor ist ein Drucksensor, bei dem eine Auswerteschaltung für die Berechnung des genauen Meßwertes mit verwendet wird. Der Drucksensor ist mit einem Festwertspeicher zu einer Baueinheit zusammengefaßt. Im Festwertspeicher sind Korrekturwerte für die Meßsignale des Sensors abgelegt. Auf einem Prüfstand werden nacheinander mehrere Meßpunkte der vom Drucksensor zu messenden Größe durchlaufen. In jedem Meßpunkt wird das vom Drucksensor abgegebene Meßsignal als IstWert in einer Abgleichschaltung verglichen. Die Abweichung zwischen Ist- und Soll-Wert wird als Korrekturwert ermittelt und in den Speicher der Sensorbaueinheit abgelegt.

Nachteilig ist, daß das Ermitteln und Einspeichern der Korrekturwerte nur im geöffneten Zustand der Sensorbaueinheit möglich sind. Nach dem Korrektur- und Einspeicherungsvorgang werden Daten- und Adreßbus vom Speicher entfernt und die Sensorbaueinheit mit Isolierstoff gekoppelt, so daß die Adressund Dateneingänge nun nicht mehr zugänglich sind. Durch die Abkapselung kommt es aber erneut zu einer Verstellung der bereits korrigierten Meßsignale, die sich nun nicht mehr erneut korrigieren lassen.

Aus der DE-U-9 408 516 (PCT/EP 94/03825) ist ein Drehwinkelsensor bekannt. Er besteht aus einer stationären Einheit, die wenigstens ein Statorelement enthält, und einer rotierenden Einheit, die gegenüber der stationären Einheit bewegbar angeordnet ist. Das Statorelement besteht aus zwei Statorteilelementen, die zwischen sich eine Abstandsausnehmung freilassen. In der Abstandsausnehmung ist ein magnetelektrisches Bauteil, insbesondere ein Hall-Element angeordnet, das eine Spannung abgibt, die dem Drehwinkel entspricht.

Aus der DE-A-4 445 378 ist ein Drehzahlsensor bekannt, der zur Erfassung der Winkelposition einer rotierenden Welle, beginnend vom Stillstand bis zur höchst zulässigen Nenndrehzahlen eine Kurve von Rechteck-Impulsen ausgibt. Zur Ausgabe eines Stillstandsausgangssignals wird ein aufgenommenes Signal der magnetisches Flußdichte mit einem Schwellwertsignal verglichen.

Nachteilig ist bei den beiden letztgenannten bekannten Lösungen, daß eine die Einjustierung der Sensorspannung bzw. des Schwellwertsignals durch verstellbare Widerstandseinheiten vorgenommen wird. Die Verstellung der Widerstandseinheit kann aber nur im geöffneten Zustand des jeweiligen Sensors erfolgen. Ist der Sensor von seinem Gefäß umgeben, ist eine nachträgliche Veränderung nicht mehr möglich.

Aus der US-A-4 783 659 ist eine Justiervorrichtung für Sensoren bekannt, bei der die Programmierung der gewünschten Einstellungen über eine spezifische Datenübertragungs-Einheit vorgenommen wird.

Es stellt sich deshalb die Aufgabe, eine Vorrichtung zum Einjustieren einer physikalischen Größe, die von einem Sensor in Ausgangswerte oder -kurven umgeformt wird, so weiter zu entwickeln, daß die Einjustierung beliebig oft auf einfache Art und Weise insbesondere bei gekapselten Sensoren vorgenommen werden kann.

Erfindungsgemäß wird diese Aufgabe durch die Merkmale des Anspruches 1 gelöst.

Die mit der Erfindung erzielten Vorteile bestehen insbesondere darin, daß der gekapselte Sensor durch eine Pin-Programmierung einjustiert werden kann. Über den Ausgabestift werden die notwendigen und gewünschten Einstellungen vorgenommen. Wesentlich ist, daß die Programmierung nicht über einen zusätzlichen, sondern einen vorhandenen Stift bzw. Pin vorgenommen wird. Wesentlich ist, daß die Justierung der Sensoren nicht nur nach der Fertigung, sondern auch unmittelbar am Einsatzort vorgenommen werden kann. Hierdurch ist es möglich, den Sensor so einzustellen, daß er den konkreten Einsatzbedingungen entspricht. Haben sich bestimmte Rand- bzw. Einsatzbedingungen verändert, kann, falls es gefordert wird, auch nach einer längeren Laufzeit des Sensors eine Nachjustierung vorgenommen werden. In der Regel können die im Ergebnis der Pin-Programmierung festgestellten Justierdaten endgültig festgeschrieben werden, ohne daß sich Werte über die Lebensdauer verändern.

Die Justierdaten können Taktfrequenzen oder Spannungsschritte einer Sensorspannung eines Drehwinkelsensors verändern. Die programmierte Justierung ist mit der Feineinstellung virtueller oder anderer Bauelemente für die Steilheit bzw. den Ausgangswinkel der Sensorspannung vergleichbar. Ebenso wird die Taktfrequenz virtuell angehoben oder abgesenkt, wie es die Einsatzbedingungen erfordern.

Die Justierdaten können Spannungspegel zur Einjustierung des Schwellenwertsignals für ein Stillstandssignal eines Drehzahlsensors verändern. Auch hier kann die Einjustierung mit einer Feineinstellung virtueller Trimm-Widerstände verglichen werden.

Die Ausgabeeinrichcung kann aus einer Reihenschaltung einer Signalwandlungseinheit und Ausgabeeinheit bestehen, wobei die Signalwandlungseinheit mit der Arbeitslogik und Ausgabeeinheit mit dem Ausgangsstift verbunden ist.

Die Signalwandlungseinheit kann unterschiedlich ausgeführt werden.

In der ersten Ausführungsform besteht die Signalwandlungseinheit aus einem Digital-Analog-Wandler, dem ein Verstärker nachgeschaltet ist. Hierdurch werden die digital ausgegebenen Daten so umgesetzt, daß sie in bekannter Art und Weise weiterverarbeitet werden können.

In der zweiten Ausführungsform kann die Signalwandlungseinheit aus einer Reihenschaltung eines galvanisch getrennten Schaltelements, insbesondere Optokopplers, eines Referenzgliedes und eines Komparators bestehen. Hierdurch wird ein elektronischer Kick-down-Schalter für Fahrpedelmodule geschaffen. Der Optokoppler gewährleistet eine galvanische Trennung.

Die Veränderungs-Einheit kann wenigstens eine Zentral-Prozessoreinheit (CPU) oder ein digitalen Rechenwerk umfassen. Sie kann auch ein an sich bekannter Rechner als Baustein sein. Ein solcher Rechner kann ein Ein-Chip-Rechner sein.

Die Arbeits-Einheit kann wenigstens aufweisen
- eine Reihenschaltung
   . eines Vorverstärkers,
   . eines Offset-Verstärkers, der mit einem Offset-Digital-Analog-Konverter verbunden ist,
   . einer Schaltkondensatorstufe,
   . einer Sample & Hold-Einheit,
   . eines Verstärkers, der mit einem Gainbits-Digital/Analog-Konverter verbunden ist,
   . eines Kennlinienbegrenzers und
   . einer Endstufe und
- einen Taktgenerator, der mit dem Vorverstärker der Schaltkondensatorstufe und der Sample & Hold-Einheit verbunden sein kann.

Der Sensor kann, wie bereits ausgeführt, ein Drehwinkelsensor oder ein Drehzahlsensor sein. Bei einem Drehwinkelsensor kann der Vorverstärker mit dessen Hall-Element verbunden sein. Ebenso ist es möglich, daß bei einem Drehzahlsensor dessen Sensor-Komparator an dem Vorverstärker angeschlossen ist.

Der Taktgenerator kann mit dem Hall-Element verbunden sein.

Vor dem Hall-Element kann eine Spannungs- oder Stromquelle mit Temperaturkompensation angeordnet sein. Eine derartige Spannungs- oder Stromquelle kann ebenfalls noch vor dem Sensor-Komparator positioniert werden.

Als Justierdaten können Grobjustierpegel in den Vorverstärker, Grob-Bits in den Offset-Verstärker und Feinjustierpegel in den Verstärker, Kennlinienbegrenzer-Bits in den Kennlinienbegrenzer eingegeben werden.

Durch diese besondere Ausgestaltung der Arbeits-Einheit ist eine genaue und feine Einjustierung möglich. Es wird darüber hinaus gesichert, daß die genau einjustierten Daten unverändert und ständig ausgegeben werden.

Die Erfindung wird nachstehend anhand der Zeichnung näher erläutert. Es zeigen:
- Fig. 1a: ein Blockschaltbild einer Pin-Justiervorrichtung für Drehwinkel- und Drehzahlsensoren,
- Fig. 1b: eine Signalwandlungseinheit einer Pin-Justiervorrichtung gemäß Fig. 1a,
- Fig. 1c: eine weitere Ausführungsform einer Ausgabeeinrichtung einer Pin-Justiervorrichtung gemäß Fig. 1a,
- Fig. 2: eine Drosselklappeneinheit und einen mit ihr verbundenen Drehwinkelsensor in einer schematischen, teilweise geschnittenen Darstellung,
- Fig. 3: eine Arbeits-Einheit einer Pin-Justiervorrichtung gemäß Fig. 1a für einen Drehwinkelsensor gemäß Fig. 2 in einer schematischen Blockschaltbilddarstellung,
- Fig. 4a: einen temporären Einschreibevorgang in eine Arbeits-Einheit gemäß Fig. 3,
- Fig. 4b.: einen permanenten Einschreibevorgang in eine Arbeits-Einheit gemäß Fig. 3
- Fig. 5: einen Kurvenverlauf einer Bit-Folge für eine Arbeits-Einheit gemäß Fig. 3,
- Fig. 6: Kurvenverläufe von Sensorspannungen eines Drehwinkelsensors gemäß Fig. 2 mit einer Pin-Justiervorrichtung gemäß den Fig. 1a bis 1c und 3,
- Fig. 7: ein Blockschaltbild einer Vorrichtung zur Erfassung der Winkelposition einer rotierenden Welle,
- Fig. 8: Darstellungen eines Umschaltverhaltens einer Vorrichtung gemäß Fig. 7 und
- Fig. 9: eine Darstellung eines Schaltfensters eines Schwellensignals in bezug zum auftretenden Hallspannungsverlauf bei einem Impulsrad.

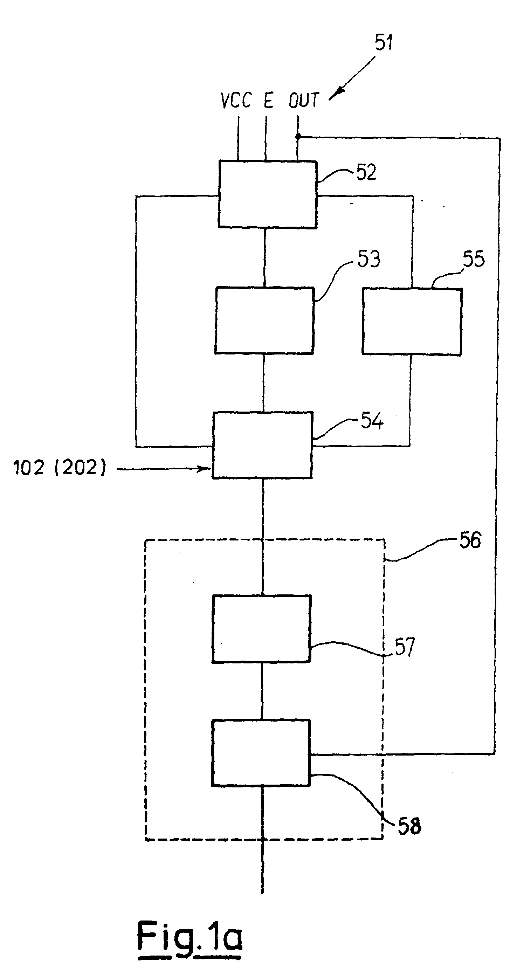

Ein Blockschaltbild einer Pin-Justiervorrichtung ist in den Fig. 1a bis 1c dargestellt.

Sie besteht aus einer Reihenschaltung
- einer Veränderungs-Einheit 52,
- eines Permanent-Speichers 53,
- einer Arbeits-Einheit 54 und
- einer Ausgabeeinrichtung 56.

Parallel zum Permanent-Speicher 53 ist ein Temporär-Speicher 55 angeordnet, der mit der Veränderungs-Einheit 52 und der Arbeits-Einheit 54 verbunden ist. Die Veränderungs-Einheit 52 ist darüber hinaus direkt mit der Arbeits-Einheit 54 verbunden. Die Arbeits-Einheit 54 liegt an einem Drehwinkeloder Drehzahlsensor 102, 202 an.

Die Ausgabeeinrichtung 56 besteht aus einer Reihenschaltung
- einer Signalwandlungseinheit 57 und
- einer Ausgabeeinheit 58.

An der Veränderungs-Einheit 52 ist eine Steckerleiste 51 angeordnet, die wenigstens einen Spannungsstift VCC, einen Massestift E und einen Ausgangstift OUT aufweist. Der Ausgangsstift OUT ist mit der Ausgabeeinheit 58 verbunden. Die Veränderungs-Einheit 52 ist ein digitales Rechenwerk oder ein Ein-Chip-Rechner mit einer Zentralprozessor-Einheit, in den ein Justier- und Arbeitsprogramm eingeschrieben ist.

Die Signalwandlungseinheit 57 besteht gemäß Fig. 1b aus einer Reihenschaltung
- eines Digital-Analog-Wandlers 571 und
- eines Verstärkers 572.

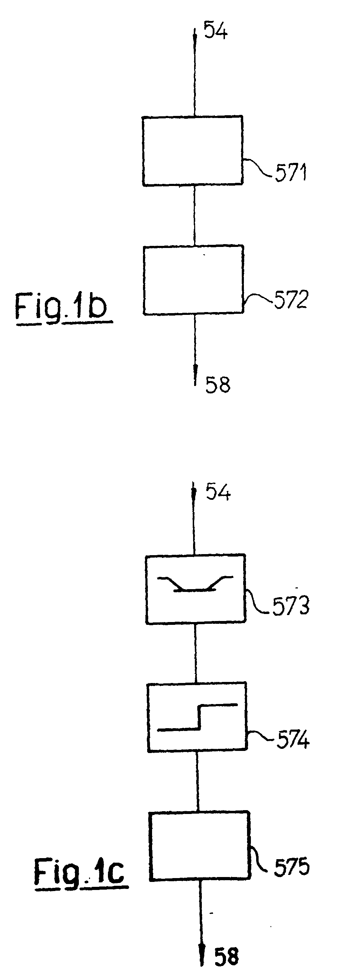

Eine weitere Ausführungsform der Signalwandlungseinheit 57, wie sie in Fig. 1c gezeigt ist, besteht aus einer Reihenschaltung
- eines Optokopplers 573,
- eines Referenzspannungsgliedes 574 und
- eines Komparators 575.

Erwähnt sei an dieser Stelle, daß anstelle des Verstärkers 572 auch ein Komparator einsetzbar ist.

Erfindungswesentlich ist, daß über den Ausgangsstift OUT eine Pin-programmierte Justierung ohne zusätzlichen Programmstift der Drehwinkel- und Drehzahlsensoren, insbesondere im gekapselten Endzustand, möglich ist.

Die in den Fig. 1a bis 1c dargestellten Teile sollen in Zusammenarbeit mit dem Drehwinkelsensor 102 und dem Drehzahlsensor 202 erläutert werden.

Zuvor wird der aus der eingangs genannten DE-U-9 408 516 bekannte Drehwinkelsensor 102 etwas ausführlicher beschrieben. Der Drehwinkelsensor 102 ist mit einer Drosselklappeneinheit 101 verbunden.

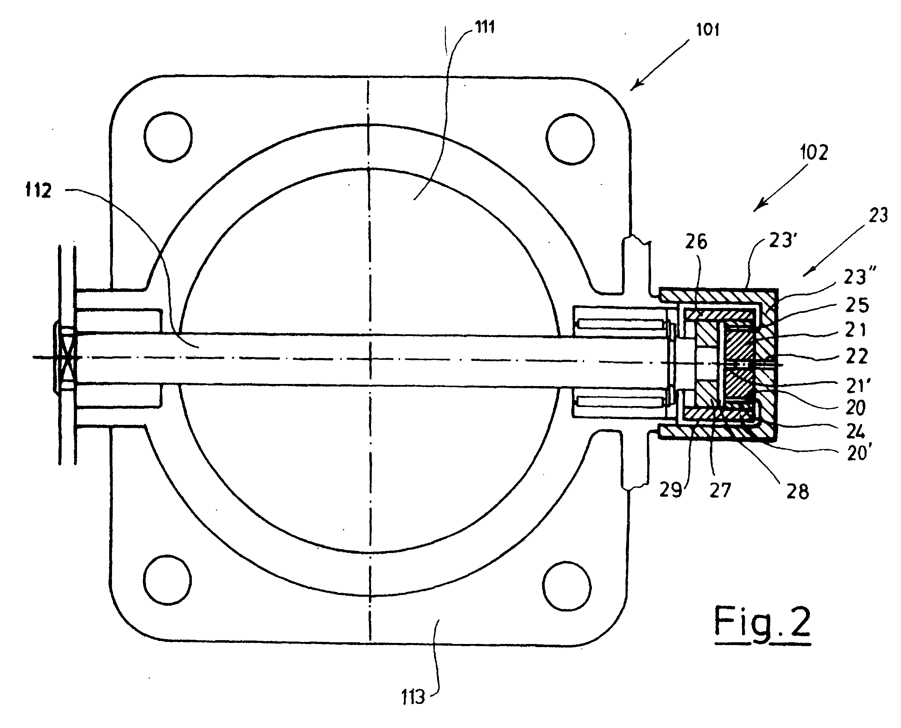

In Fig. 2 ist eine Drosselklappeneinheit 101 und ein mit ihr verbundener Drehwinkelsensor 102 dargestellt.

Die Drosselklappeneinheit besteht aus einer Drosselklappe 111, die mit einem Drosselklappenwellenelement 112 verbunden in einem Drosselklappen-Gehäuseelement 113 gelagert ist.

Der Drehwinkelsensor 102 besteht aus
- einer stationären Einheit 20 und
- einer rotierenden Einheit 20'.

Zur Erreichung eines linearen Verhaltens des magnetischen Flusses besteht ein Statorelement 21 aus zwei abgerundet halbmondförmig ausgebildeten Statorteilelementen, die sich einander gegenüberliegen, die an den Ecken Fasen aufweisen und zwischen denen sich eine Abstandsausnehmung 21" befindet.

Die Statorteilelemente werden in ein Gefäßelement 23 mit einem wesentlichen zylindrisch ausgebildeten Wandteil 23' und einem Bodenelement 23" eingebracht.

Im Bodenelement 23" ist eine Zentralausnehmung 21' vorgesehen, die eine im wesentlichen nutfönnige Konfiguration hat.

Die Zentralausnehmung 21' und die Abstandsausnehmung 21" haben eine solche Breite, daß sie in weiten Abschnitten zueinander kompatibel sind. In die Abstandsausnehmung 21" wird ein Hall-Element 22 als magneto-elektrisches Bauteil eingeführt.

Die gegenüber der so ausgebildeten stationären Einheit 20 rotierende Einheit 20' weist ein Magnetelement 24 auf, das ringförmig ausgebildet ist. Es wird von einer Magnethalterungseinheit 26, 27 gehalten. Die Magnethalterungseinheit besteht aus einem zylinderförmig ausgebildeten Magnethalterungselement 26, in das ein Distanzscheibenelement 27 einführbar und fixierbar ist. Das Distanzscheibenelement 27 ist mit dem Drosselklappenelement 112 direkt verbunden. Zwischen dem Distanzscheibenelement 27 und dem Statorelement 21 befindet sich, wenn das Gehäuseelement 23 am Drosselklappen-Gehäuseelement 113 der Drosselklappeneinheit 101 befestigt ist, ein Spalt 28. Zwischen der Zylinderwand 23' und dem Magnethalterungselement 26 liegt ein Spalt 29. Dadurch bilden das Magnethalterungselement 26 und das in ihm gehaltene Magnetelement 24 sowie das Distanzscheibenelement 27 eine Rotoreinheit, die sich geschützt im Inneren des Gehäuseelements 23 bewegen kann.

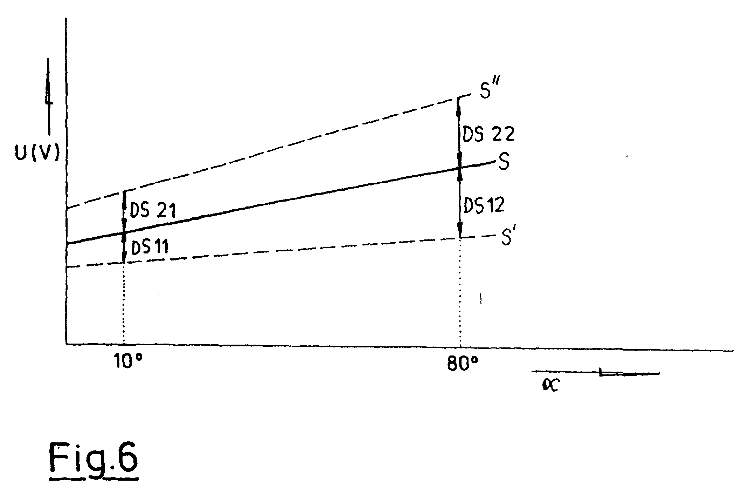

Das Hall-Element 22 gibt eine unjustierte Sensorspannung S' ab. Diese ist in einem Diagramm, das auf der einen Achse die Spannung U und der anderen Achse den Drehwinkel α zeigt, in Fig. 6 dargestellt. Zur Justierung dieser abgegebenen Sensorspannung S' wird an den Drehwinkelsensor 102 die Pin-Justiervorrichtung angeschlossen.

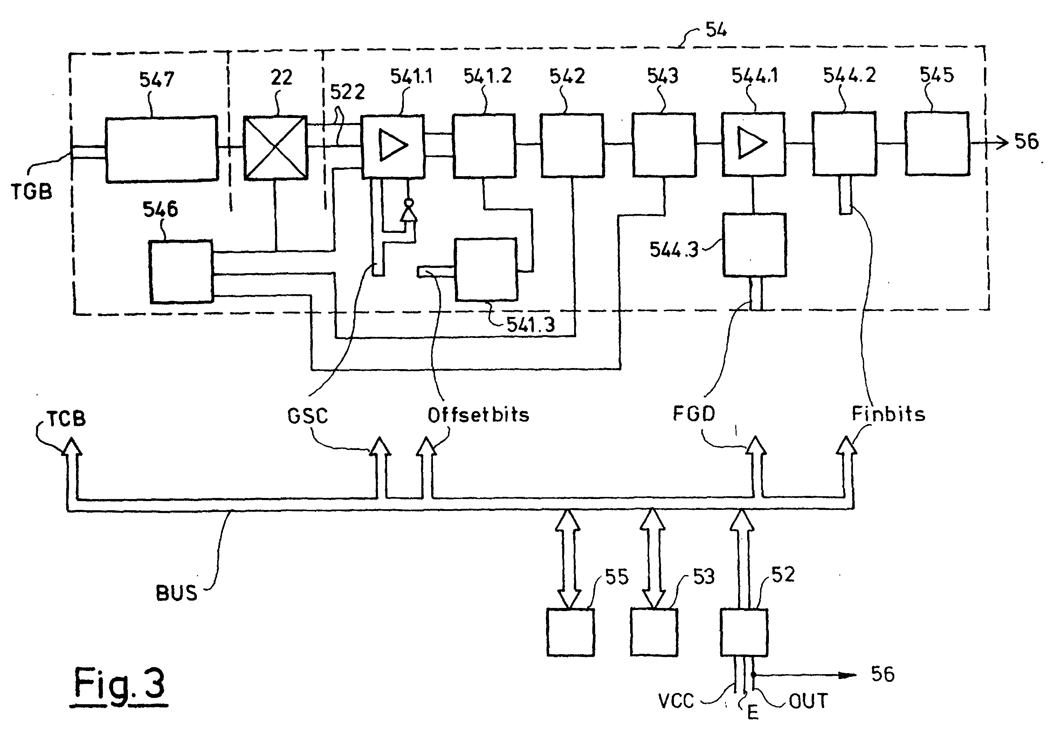

In Fig. 3 ist ein Blockschaltbild der Arbeits-Einheit 54 gezeigt. Ihr gegenüber liegen die Veränderungs-Einheit 52, der Permanent-Speicher 53 und der Temporär-Speicher 55. Die Weiterverbindung zur Ausgabeeinrichtung 56 ist mit einem Pfeil angezeigt.

Vor dem Hall-Element 22 ist eine Spannungsquelle 547 mit Temperaturkompensation angeordnet. Die Temperaturkompensation sichert, daß von der Spannungsquelle aufgrund unterschiedlichster Außentemperaturen eine den Temperatur-Koeffizienten des Hall-Elements 22 kompensierende Ausgangsspannung abgegeben wird. Das ist von besonderer Bedeutung, da der Drehwinkelsensor 102 beim Einsatz in einem Fahrzeug großen Temperaturschwankungen ausgesetzt ist.

Der Spannungsquelle mit Temperaturkompensation 547 gegenüberliegend sind in Reihe folgende Teile angeordnet:
- ein Vorverstärker 541.1,
- ein Offset-Verstärker 541.2, der mit einem Offset-Digital/Analog-Konverter verbunden ist,
- eine Schaltkondensatorstufe 542,
- eine Sample & Hold-Einheit 543,
- ein Verstärker 544.1, der mit einem Gainbit-Digital/Analog-Konverter verbunden ist,
- ein Kennlinienbegrenzer 544.2 und
- eine Endstufe 545.

Die Schaltkondensatorstufe 542 dient der automatischen Kompensation des Offset des Hall-Elements 22.

Die Sample & Hold-Einheit 543 übernimmt die Aufgabe, die Spannungswerte während der Erzeugung des Folgewertes zwischenzuspeichern.

Zur Arbeits-Einheit 54 gehört ein Taktgenerator (Clock-Unit) 546, der mit dem Hall-Element 22, dem Vorverstärker 541.1, der Schaltkondensatorstufe 542 und der Sample & Hold-Einheit 543 verbunden ist.

Die Veränderungs-Einheit 52, der Permanent-Speicher 53 und der Temporär-Speicher 55 sind mit einem Bussystem BUS verbunden. Das Bussystem BUS kann, wie an sich bekannt, einen Daten-, Adress- und einen Steuer-Bus aufweisen. Im speziellen Fall handelt es sich um einen reinen Daten-Bus.

Vom Bussystem BUS zweigt ein Grobjustierpegel GSC ab, der zum Vorverstärker 541.1 führt. Daneben liegt eine Abzweigung Grob-Bits Offset-Bits, die zum Offset-Digital/Analog-Konverter 541.3 führt.

Vom Bussystem BUS führt darüberhinaus ein Abzweig Feinjustierpegel FGD zum Gainbit-Digital-Analog-Konverter. Daneben liegt ein Abzweig Fein-Bit Fin-Bits, der zum Kennlinienbegrenzer 544.2 führt.

Der Grobjustierpegel GSC mit den Grob-Bits Offset-Bits ist eine Grobjustiereinstellung. Der danebenliegende Feinjustierpegel FGB mit den Kennlinien-Begrenzungs-Bits Fin-Bits hingegen stellt eine Feinjustiereinstellung dar.

Das Bussystem BUS kann darüberhinaus eine Abzweigung Temperatur-Koeffizient-Bits TCB aufweisen, mit der der Temperaturgradient der Spannungsquelle 547 z. B. von der Veränderungseinheit 52 gesteuert werden kann.

Zur Einjustierung der Sensorspannung S' werden über den Ausgangsstift OUT und die Veränderungs-Einheit 52 Justierdaten in den Temporär-Speicher 55 eingegeben. Hierbei wird zuerst die Grobeinstellung mit dem Grobjustierpegel GSC zwischen 2 und 4 Bits, z.B. 3 Bits, und den Grob-Bits Offset-Bits zwischen 8 und 15 Bits, z.B. 10 Bits, und danach sukzessive die Feineinstellung mit dem Feinjustier-Pegel FGB zwischen 7 und 14 Bits, z.B. 9 Bits, und den Kennlinien-Begrenzungs-Bits Fin-Bits zwischen 1 und 4 Bits, z.B. 2 Bits, vorgenommen. Die Veränderungs-Einheit 52 sorgt dafür, daß diese Daten für die Grob- und die Feinjustiereinstellung aus dem Temporär-Speicher 55 abgerufen werden.

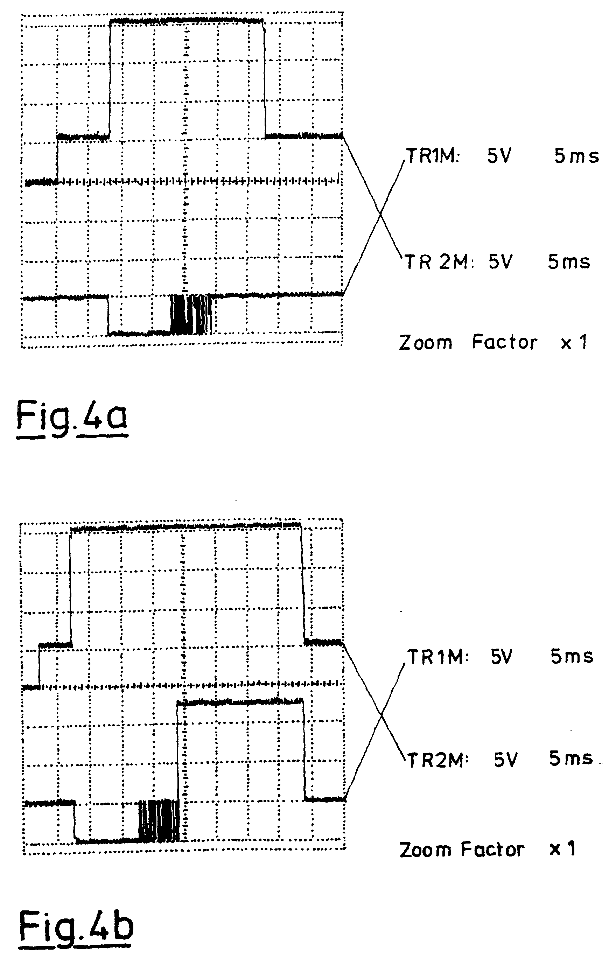

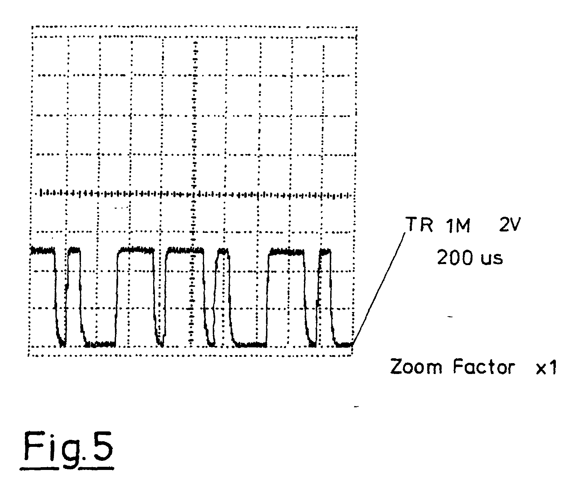

In Fig. 4a ist der Einschreibvorgang der Veränderungs-Einheit 52 in den Temporär-Speicher 55 gezeigt. Hierbei wird die mit TR1M bezeichnete Hallspannung S22 des Hall-Elements 22 durch die genannten Justierdaten GSC/Offset-Bits sowie FGD/Fin-Bits um den mit TR2M gezeigten Spannungshub angehoben. Diese Werte werden mit dem in Fig. 4b gezeigten Einschreibevorgang (Zap-Vorgang) aus dem Temporär-Speicher 55 abgerufen und in den Permanent-Speicher 53 eingeschrieben. Die entsprechende Bit-Folge für das mit TR1M bezeichnete Signal ist Fig. 5 beispielhaft gezeigt.

Durch das Eingeben weiterer Justierdaten wird die Sensorspannung S soweit angehoben, daß sie den mit S bezeichneten Verlauf nimmt (Fig. 6). Bei 10 und 80° ist dabei die Sensorspannung S gegenüber der Sensorspannung S' um die Spannungsdifferenzen DS11 und DS12 angehoben. Bei weiterem Justieren kann die Sensorspannung so weit angehoben werden, daß sie den Verlauf hat, wie er mit S" bezeichnet ist. Hierbei sind gegenüber S Spannungsdifferenzen mit DS21 und DS22 bei 10 und 80° bezeichnet.

Ergibt die protokollarische Auswertung der Justierung, daß die Sensorspannung S der Normkennlinie entspricht, werden deren Justierdaten von dem Temporär-Speicher 55 in den Permanent-Speicher 53 durch die Veränderungs-Einheit 52 eingeschrieben. Der Permanent-Speicher 53 ist ein ROM-Speicher, PROM-Speicher, EEPROM-Speicher oder ein anderer Festwertspeicher (Nur-Lese-Speicher), währenddessen der Temporär-Speicher 55 ein RAM-Speicher oder ein ähnlich ausgebildeter Schreib/Lese-Speicher ist.

Der mit der Pin-Justiervorrichtung einjustierte Drehwinkelsensor 102 greift bei laufendem Betrieb die in den Permanentspeicher 53 eingegebenen Groß-Bits Offset-Bits und Fein-Bits Fin-Bits als Justierdaten ab. Insbesondere der Offset-Verstärker 541.2, die Schaltkondensatorstufe 542 und die Sample & Hold-Einheit, sowie der Kennlinienbegrenzer 544.2 sorgen dafür, daß die eingegebenen Bits in einen gleichbleibenden Spannungspegel umgesetzt werden, der der abgegebenen Sensorspannung S" (S22) ständig zugegeben werden. Würde die abgegebene Sensorspannung hingegen der Sensorspannung S" entsprechen, würden die Spannungspegel ständig von dieser abgezogen, um so zur gewünschten Sensorspannung S zu gelangen.

Für die Zusammenarbeit der in den Fig. 1a bis 1c dargestellten Teile mit dem Drehzahlsensor 202 wird dieser aus der eingangs genannten DE-A-4 445 578 etwas ausführlicher vorgestellt.

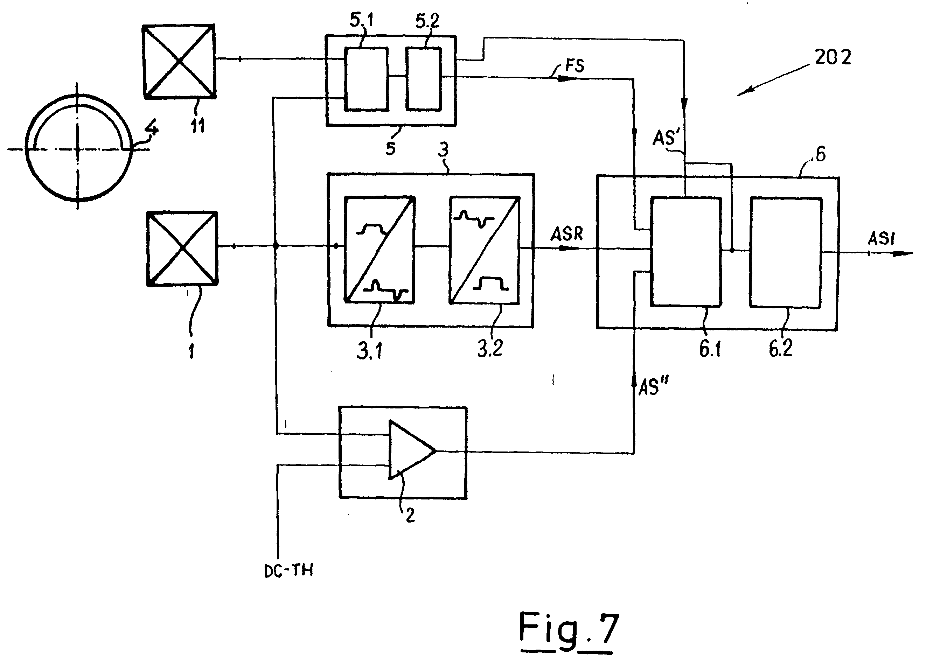

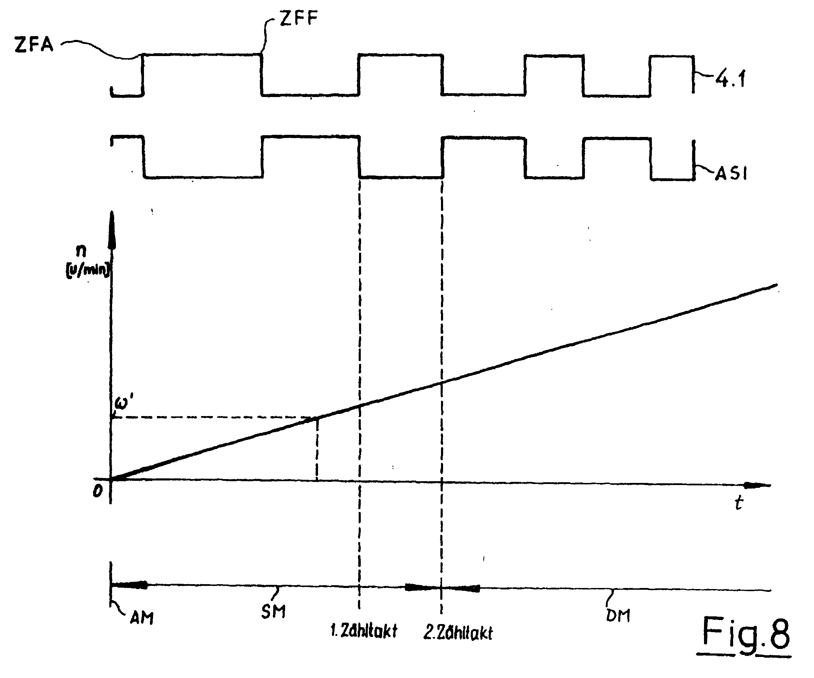

Der Drehzahlsensor 202 gemäß den Fig. 7 und 8 hat folgende Zweige:
A) Einen Stillstandszweig
   Er wird repräsentiert durch eine Hallzelle 1 und einen Sensor-Komparator 2. Er arbeitet gemäß Fig. 8 im Anfahr-Modus AM und gibt ein Stillstandsignal AS" aus.
B) Einen statischen Zweig
   Er wird repräsentiert durch die Hallzelle 1 und eine weitere Hallzelle 11 und eine Fenstersignaleinheit 5, die aus einer Reihenschaltung einer Fensterschaltung 5.1 und einem Fensterkomparator 5.2 besteht; im statischen Modus SM gibt er ein Statikausgangssignal AS' aus.
C) Einen dynamischen Zweig
   Er besteht aus der Zusammenschaltung der Hallzelle 1 und der dynamischen Ausgangsschaltung 3, die aus einer Reihenschaltung eines Differenziergliedes und einer Wendepunkterkennungsschaltung 3.2 besteht und gibt im dynamischen Modus DM ein Ausgangssignal ASR aus.
D) Einen Störimpulsunterdrückungszweig
   Er besteht aus den Hallzellen 1 und 11, der Fensterschaltung 5 und einer Ausgabeschaltung 6, die aus einer Reihenschaltung, einer Entscheidungslogik 6.1 und einer Ausgabeeinheit 6.2 besteht. Er gibt das Positionsausgangssignal ASI aus.

Vor den Hallzellen 1 und 11 rotiert ein Impulsrad 4.1, wie es in Fig. 8 dargestellt ist. Eine Abwicklung des Impulsrades 4.1 bei steigender Umdrehungszahl in der Zeiteinheit ist in der Fig. 8 als Kurve 4.1 gezeigt. Je schneller sich das Impulsrad dreht, desto zeitlich kürzer dauert die Vorbeifahrt der Zähne und Zahnlücken an den Hallzellen. Die Zähne weisen dabei eine ansteigende und eine abfallende Zahnflanke ZFA und ZFF auf.

Der Sensor-Komparator 2 stellt das "Stillstandselement" dar. In ihm werden die Meßwerte der Hallzelle 1 mit einem Schwellenwertsignal DC-TH verglichen. Das Schwellenwertsignal DC-TH, das ein Gleichstromsignal ist, wird durch einen oberen und einen unteren Spanungspegel UHZ und UZL begrenzt. Er bildet, wie Fig. 7 zeigt, ein Schaltfenster SF, das durch einen obersten Zahnlücken-Hallspannungswert UHZLmax und einen untersten Zahnlücken-Hallspannungswert UHZLmin begrenzt wird.

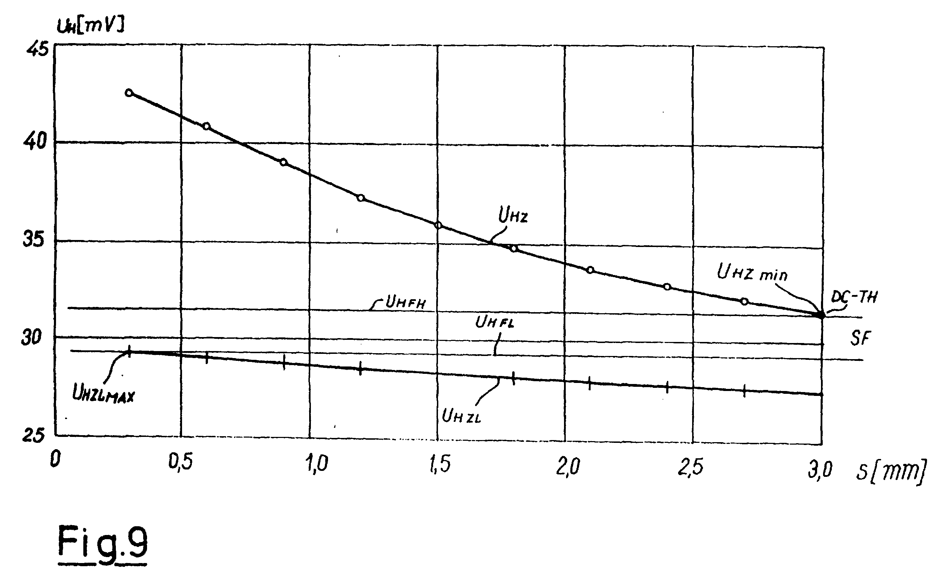

In Fig. 9 ist darüber hinaus der Verlauf der Zahn-Hallspannung UHZ und der Zahnlücken-Hallspannung UHZL dargestellt. Der unterste Zahn-Hallspannungspegel UHZmin begrenzt den obersten Schaltfensterpegel UHFH und der oberste Zahnlücken-Hallspannungswert UHZLmax den untersten Schaltfensterpegel UHFL.

Die Einjustierung des Schaltfensters SF zwischen die beiden Hallspannungsverläufe wird wie folgt vorgenommen:

Über den Ausgangsstift OUT wird durch die Veränderungs-Einheit 52 die Arbeits-Einheit 54 in die Justier-Position versetzt. Die Arbeits-Einheit 54 ist dabei ähnlich aufgebaut, wie in Fig. 3 gezeigt. Danach werden über den Ausgangsstift OUT die Justierdaten in Form von Groß-Bits Offset-Bits und Fein-Bits Fin-Bits in den Temporärspeicher eingegeben. Diese werden in entsprechende Spannungssignale umgewandelt, die das Schaltfenster so verschieben, daß es zwischen dem untersten Zahn-Hall-Spannungswert UHZmin und dem obersten Zahnlücken-Hall-Spannungswert UHZLmax zu liegen kommt. Die beiden Hallspannungskurven bleiben in diesem Fall unverändert. Hierdurch wird ein solches Schwellwertsignals DC-CH erzeugt, die einen exakten Kurvenverlauf des anstehenden Signals AS" sichert, das dann am Ausgang des Sensor-Komparators 2 ausgegeben wird. Hierdurch wird das Stillstandsausgangssignal AS" des Positionssignal ASE so genau einjustiert, daß es in die Position einer Welle im Stillstand, die mit dem Impulsrad 4.1 verbunden ist, genauestens abgibt.

Ist die Justierstellung des Schaltfensters SF erreicht, werden die Justierdaten Grob-Bits Offset-Bits und Fein-Bits Fin-Bits in in den Permanent-Speicher 53 eingeschrieben. Ist der Einschreibvorgang beendet, wählt die Veränderungs-Einheit 52 die Arbeits-Einheit 54 an und stellt auf den einjustierten Dauerbetrieb um.

Das Schaltfenster SF des Schwellwertsignals DC-TH ist in einer weiteren Einjustierungsvariante feststehend. Die Hallspannungskurven werden durch die Groß-Bits Offset-Bits und Fein-Bits Fin-Bits so verschoben, daß der unterste Zahn-Hallspannungswert UHZmin oberhalb des oberen Schaltfensterspannungspegel UHFH und der oberste Zahnlücken-Hallspannungswert UHZLmax unterhalb des untersten Schaltfensterspannungspegels UHFL liegt. Mit Hilfe der Fein-Bits Fin-Bits ist eine genaueste Einjustierung möglich. Ist die Justierstellung erreicht, werden diese Daten in den Permanent-Speicher 53 eingeschrieben und der einjustierte Betrieb des Drehzahlsensors 202 aufgenommen.

Erfindungswesentlich ist, daß das Pin-programmierte Einjustieren des Schaltfensters SF eine Justierung bei fertiggestellten Drehzahlsensor 202 vorgenommen wird. Einflüsse von anderen Bauelementen sowie sonstige Störeinflüsse können bei der Einjustierung berücksichtigt werden. Hierdurch wird eine starre "Zufalls-Justierung" vermieden, so daß die Drehzahlsensoren dem jeweiligen Einsatzfall entsprechend genaueste Signalverläufe ASI ausgeben können.

Wird die signaiwandlungseinheit 57 gemäß Fig. 1c eingesetzt, werden von der Arbeitslogik 54 abgegebene Augangssignale ASI auf den Optokoppler 573 gegeben. Das vom Optokoppler gebildete Signal wird auf das Referenzspannungsglied 574 gegeben und mit einer eingestellten Referenzspannung verglichen. Wird der eingestellte Wert erreicht, so wird der Ausgang des Komparators 574 auf "high" gesetzt. Dieses Ausgangssignal wird dann über die Ausgabeeinheit 58 an den Ausgangsstift OUT weitergegeben.

Erfindungswesentlich ist, daß durch die beschriebene Schaltungsanordnung, wie sie Fig. 1b zeigt, ein elektronischer Kick-down-Schalter für Fahrpedalmodule realisiert wird. Er stellt einen Ersatz für die mechanischen Kick-down-Schalter dar. Von besonderem Vorteil ist, daß der elektronische Kick-down-Schalter mit in den Sensor integriert ist. Der Optokoppler 573 gewährleistet eine galvanische Trennung dieses Schalters.

## Patentansprüche

1. Vorrichtung zum Eimustieren einer physikalischen Größe, die von einem Sensor (102; 202) in Ausgangswerte oder -kurven umgeformt wird, die wenigstens aufweist,
- eine Veränderungs-Einheit (52), die über einen Permanent-Speicher (53) mit einer Arbeits-Einheit (54) an einer Ausgabeeinrichtung (56) anliegt und die mit der Arbeits-Einheit (54) direkt verbunden ist und
- einen Temporär-Speicher (55), der parallel zum Permanent-Speicher (53) angeordnet und an der Veränderungs-Einheit (52) und der Arbeits-Einheit (54) angeschlossen ist,
- wobei an der Arbeits-Einheit (54) der Sensor (102; 202) anliegt,
- wobei an der Veränderungs-Einheit (52) eine Steckerleiste (51) mit wenigstens einem Ausgangsstift (OUT) angeordnet ist,
- wobei der Ausgangsstift (OUT) mit der Ausgabeeinrichtung (56) verbunden ist, und
- wobei die Vorrichtung so ausgelegt ist, daß die Ausgangswerte oder -kurven (S, S', S"; AS") wie folgt einjustiert werden:
a) über den Ausgangsstift (OUT) werden über die Veränderungs-Einheit (52) Justierdaten (GSC, Offset-Bits, FGB, Fin-Bits) in den Temporär-Speicher (55) zwischengespeichert, mit denen die Arbeits-Einheit (54) über die Ausgabeeinrichtung (56) veränderte Ausgangswerte oder -kurven (S; S', S"; AS") am Ausgangsstift (OUT) ausgibt;
b) haben die Ausgangswerte oder -kurven (S, S', S"; AS") ihre Justierstellung erreicht, werden diese Justierdaten (GSC, Offset-Bits, FGB, Fin-Bits) in den Permanent-Speicher (53) durch die Veränderungs-Einheit (52) eingeschrieben.

2. Vorrichtung nach Anspruch 1, **dadurch gekennzeichet, daß** die Justierdaten Taktfrequenzen oder Spannungsschritte einer Sensorspannung eines Drehwinkelsensors verändern.

3. Vorrichtung nach Anspruch 1, **dadurch gekennzeichnet, daß** die Justierdaten Spannungspegel (UHZ, UZL) eines Schwellwertsignals (DC-TH) für ein Stillstandssignal (AS") eines Drehzahlsensors verändern.

4. Vorrichtung nach einem der Ansprüche 1 bis 3, **dadurch gekennzeichnet, daß** die Ausgabeeinrichtung (56) aus einer Reihenschaltung einer Signalwandlungseinheit (57) und einer Ausgabeeinheit (58) besteht, wobei die Signalwandlungseinheit (57) mit der Arbeits-Einheit (54) und die Ausgabeeinheit (58) mit dem Ausgangsstift (OUT) verbunden ist.

5. Vorrichtung nach einem der Ansprüche 1 bis 4, **dadurch gekennzeichnet, daß** die Signalwandlungseinheit (57) aus einem Digital-Analog-Wandler (571) besteht, dem ein Verstärker (572) nachgeschaltet ist.

6. Vorrichtung nach einem der Ansprüche 1 bis 5, **dadurch gekennzeichnet, daß** die Signalwandlungseinheit (57) aus einer Reihenschaltung eines galvanisch getrennten Schaltelements, insbesondere eines Optokopplers (573), eines Referenzgliedes (574) und eines Komparators (575) besteht.

7. Vorrichtung nach einem der Ansprüche 1 bis 6, **dadurch gekennzeichnet, daß** die Veränderungs-Einheit (52) wenigstens eine Zentral-Prozessoreinheit (CPU) oder ein digitales Rechenwerk umfaßt.

8. Vorrichtung nach einem der Ansprüche 1 bis 7, **dadurch gekennzeichnet, daß** die Arbeits-Einheit (54) wenigstens aufweist
- eine Reihenschaltung
. eines Vorverstärkers (541.1),
. eines Offset-Verstärkers (541.2), der mit einem Offset-Digital-Analog-Konverter (541.3) verbunden ist,
. einer Schaltkondensatorstufe (542),
. einer Sample & Hold-Einheit (543),
. eines Verstärkers (544.1), der mit einem Gambits-Digital/Analog-Konverter (544.3) verbunden ist,
. eines Kennlinienbegrenzers (544.2) und
. einer Endstufe (545) und
- einen Taktgenerator (546), der mit dem Vorverstärker (541.1) der Schaltkondensatorstufe (542) und der Sample & Hold-Einheit (543) verbunden ist.

9. Vorrichtung nach einem der Ansprüche 1 bis 8, **dadurch gekennzeichnet, daß** der Vorverstärker (541.1) mit einem Hall-Element (22) eines Drehwinkelsensors (102) oder einem Sensor-Komparator (2) eines Drehzahlsensors (202) als Sensor verbunden ist.

10. Vorrichtung nach einem der Ansprüche 1 bis 9, **dadurch gekennzeichnet, daß** der Taktgenerator (546) mit dem Hall-Element (22) verbunden ist.

11. Vorrichtung nach einem der Ansprüche 1 bis 10, daß vor dem Hall-Element (22) eine Spannungs- oder Stromquelle mit Temperaturkompensation (547) angeordnet ist.

12. Vorrichtung nach einem der Ansprüche 1 bis 11, **dadurch gekennzeichnet, daß** als Justierdaten Grobjustierpegel (GSC) in den Vorverstärker (541.1), Grob-Bits (Offset-Bits) in den Offset-Verstärker (541.2) und Feinjustierpegel (FGB) in den Verstärker (544.1), Kennlinien-Begrenzungs-Bits (Fin-Bits) in den Kennlinienbegrenzer (544.2) eingegeben werden.

## Claims

1. A device for adjusting a physical quantity converted by a sensor (102; 202) into output values or curves, the device comprising at least:
- an altering unit (52) which adjoins an output device (56) via a permanent memory (53) and a working unit (54) and is directly connected to the working unit (54), and
- a temporary memory (55) disposed parallel to the permanent memory (53) and connected to the altering unit (52) and the working unit (54),
- wherein the sensor (102; 202) adjoins the working unit (54),
- wherein a multipoint connector (51) with at least one output pin (OUT) is disposed on the altering unit (52),
- wherein the output pin (OUT) is connected to the output device (56), and
- wherein the device is so constructed that the output values or curves (S, S', S''; AS'') are adjusted as follows:
a) adjusting data (GSC, offset bits, FGB, fin bits) are temporarily stored in the temporary memory (55) via the output pin (OUT) and are used by the working unit (54), via the output device (56), to output altered output values or curves (S; S', S''; AS'') at the output pin (OUT);
b) when the output values or curves (S, S', S''; AS'') have reached their adjusting position, the said adjusting data (GSC, offset bits, FGB, fin bits) are written into the permanent memory (53) by the altering unit (52).

2. A device according to claim 1, **characterised in that** the adjusting data alter clock frequencies or voltage steps of an angle of rotation sensor.

3. A device according to claim 1, **characterised in that** the adjusting data alter voltage levels (UHZ, UZL) of a threshold value signal (DC-TH) for a signal (AS'') stopping a speed of rotation sensor.

4. A device according to any of claims 1 to 3, **characterised in that** the output device (56) comprises a signal conversion unit (57) in series with an output unit (58), wherein the signal conversion unit (57) is connected to the working unit (54) and the output unit (58) is connected to the output pin (OUT).

5. A device according to any of claims 1 to 4, **characterised in that** the signal conversion unit (57) comprises a digital analog converter (571) followed by an amplifier (572).

6. A device according to any of claims 1 to 5, **characterised in that** the signal conversion unit (57) comprises an electrically disconnected switching element, particularly an opto-coupler (573), in series with a reference element (574) and a comparator (575).

7. A device according to any of claims 1 to 6, **characterised in that** the altering unit (52) comprises at least one central processor unit (CPU) or a digital computer unit.

8. A device according to any of claims 1 to 7, **characterised in that** the working unit (54) comprises at least
- a series circuit consisting of
• a preamplifier (541.1),
• an offset amplifier (541.2) connected to an offset digital-analog converter (541.3),
• a switching capacitor stage (542),
• a sample and hold unit (543),
• an amplifier (544.1) connected to a gambit digital/analog converter (544.3),
• a characteristic curve limiter (544.2) and
• an end stage (545) and
- a clock generator (546) connected to the preamplifier (541.1) of the switching capacitor stage (542) and the sample and hold unit (543).

9. A device according to any of claims 1 to 8, **characterised in that** the preamplifier (541.1) is a sensor connected to a Hall element (22) of an angle of rotation sensor (102) or to a sensor-comparator (2) of a speed of rotation sensor (202).

10. A device according to any of claims 1 to 9, **characterised in that** the clock generator (546) is connected to the Hall element (22).

11. A device according to any of claims 1 to 10, **characterised in that** a voltage or current source with temperature compensation (547) is disposed in front of the Hall element (22).

12. A device according to any of claims 1 to 11, **characterised in that** adjusting data are input in the form of coarse adjusting levels (GSC) into the preamplifier, coarse bits (offset bits) into the offset amplifier (541.2), fine adjustment levels (FGB) into the preamplifier (544.1), and characteristic curve limiting bits (fin bits) into the characteristic curve limiter (544.2).

## Revendications

1. Dispositif d'ajustage d'une grandeur physique qui est transformée en valeurs ou en courbes initiales par un capteur (102; 202), qui comporte au moins:
- une unité de modification (52) qui est agencée sur un dispositif de sortie (56) par l'intermédiaire d'une mémoire permanente (53) avec une unité de travail (54) et qui est connectée directement à l'unité de travail (54), et
- une mémoire temporaire (55) qui est agencée en parallèle à la mémoire permanente (53) et qui est raccordée à l'unité de modification (52) et à l'unité de travail (54),
- dans lequel le capteur (102; 202) est agencé sur l'unité de travail (54),
- dans lequel au moins un contacteur (51) à broches comprenant au moins une broche de sortie (OUT) est monté sur l'unité de modification (52),
- dans lequel la broche de sortie (OUT) est connectée au dispositif de sortie (56), et
- dans lequel le dispositif est agencé d'une manière telle que les valeurs ou courbes initiales (S, S', S"; AS") sont ajustées de la manière suivante :
a) des données d'ajustage (GSC, bits de déport, FGB, Fin-bits) au moyen desquelles l'unité de travail (54) sort à la broche de sortie (OUT), en passant par l'unité de sortie (56), des valeurs ou courbes initiales modifiées (S, S', S"; AS") sont mémorisées temporairement dans la mémoire temporaire (55) au moyen de la broche de sortie (OUT) en passant par l'unité de modification (52) ;
b) ces valeurs d'ajustage (GSC, bits de déport, FGB, Fin-bits) sont inscrites dans la mémoire permanente (53) par l'unité de modification (52) lorsque les valeurs ou courbes initiales (S, S', S"; AS") ont atteint leurs valeurs d'ajustage.

2. Dispositif selon la revendication 1, **caractérisé en ce que** les données d'ajustage modifient des fréquences de cycles ou des étapes de tension d'une tension de capteur d'un capteur d'écart angulaire.

3. Dispositif selon la revendication 1, **caractérisé en ce que** les données d'ajustage modifient des niveaux de tension (UHZ, UZL) d'un signal de valeur de seuil (DC-TH) pour un signal d'arrêt (AS") d'un capteur de vitesse de rotation.

4. Dispositif selon l'une quelconque des revendications précédentes, **caractérisé en ce que** le dispositif de sortie (56) se compose d'un circuit en série incluant une unité de conversion. (57) de signaux et une unité de sortie (58), dans lequel l'unité de conversion (57) de signaux est connectée à l'unité de travail (54) et l'unité de sortie (58) est connectée à la broche de sortie (OUT).

5. Dispositif selon l'une quelconque des revendications précédentes, **caractérisé en ce que** l'unité de conversion (57) de signaux se compose d'un convertisseur (571) de numérique à analogique en aval duquel est monté un amplificateur (572).

6. Dispositif selon l'une quelconque des revendications précédentes, **caractérisé en ce que** l'unité de transformation de conversion (57) de signaux se compose d'un circuit en série incluant un élément commutateur galvaniquement séparé, en particulier un coupleur optique (573), un organe de référence (574) et un comparateur (575).

7. Dispositif selon l'une quelconque des revendications précédentes, **caractérisé en ce que** l'unité de modification (52) comprend au moins une unité centrale de traitement (CPU) ou une unité de calcul numérique.

8. Dispositif selon l'une quelconque des revendications précédentes, **caractérisé en ce que** l'unité de travail (54) comprend au moins :
- un circuit en série qui inclut:
. un préamplificateur (541.1),
. un amplificateur de déport (541.2) qui est connecté à un convertisseur (541.3) de numérique à analogique de déport,
. un étage (542) de condensateur de commutation,
. une unité (543) d'échantillonnage et de maintien,
. un amplificateur (544.1) qui est connecté à un convertisseur (544.3) de numérique à analogique à bits de gain,
. un limiteur (544.2) de courbe caractéristique et
. un étage final (545), et
- un générateur (546) de signaux d'horloge qui est connecté au préamplificateur (541.1) à l'étage (542) du condensateur de commutation et à l'unité (543) d'échantillonnage et de maintien.

9. Dispositif selon l'une quelconque des revendications précédentes, **caractérisé en ce que** le préamplificateur (541.1) est connecté à un élément de Hall (22) d'un capteur (102) d'écart angulaire ou à un comparateur (2) de capteur d'un capteur (202) de vitesse de rotation, intervenant comme capteur.

10. Dispositif selon l'une quelconque des revendications précédentes, **caractérisé en ce que** le générateur (546) de signaux d'horloge est connecté à l'élément de Hall (22).

11. Dispositif selon l'une quelconque des revendications précédentes, **caractérisé en ce qu'**une source de tension ou de courant à compensation (547) de température est agencée en amont de l'élément de Hall (22).

12. Dispositif selon l'une quelconque des revendications précédentes, **caractérisé en ce qu'**il introduit, comme données d'ajustage, un niveau d'ajustage approximatif (GSC) dans le préamplificateur (541.1), des bits approximatifs (bits de déport) dans l'amplificateur à déport (541.2), un niveau d'ajustement fin (FGB) dans le préamplificateur (544.1) et des bits de limitation (Fin-Bits) de courbe caractéristique dans le limiteur (544.2) de courbe caractéristique.
